(19) Europäisches Patentamt
European Patent Office
Office européen des brevets

(11) EP 3 747 030 B1

(12) **EUROPEAN PATENT SPECIFICATION**

(45) Date of publication and mention of the grant of the patent:
**11.08.2021 Bulletin 2021/32**

(21) Application number: **19700729.7**

(22) Date of filing: **21.01.2019**

(51) Int Cl.:
***H01B 3/44*** *(2006.01)* ***C08L 23/08*** *(2006.01)*
***C08L 23/10*** *(2006.01)* ***C08L 23/14*** *(2006.01)*

(86) International application number:
**PCT/EP2019/051323**

(87) International publication number:
**WO 2019/149549 (08.08.2019 Gazette 2019/32)**

(54) **POLYOLEFIN COMPOSITION FOR CABLE INSULATION**

POLYOLEFINZUSAMMENSETZUNG ZUR KABELISOLIERUNG

COMPOSITION DE POLYOLÉFINE POUR ISOLATION DE CÂBLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.02.2018 US 201862625870 P**
**05.02.2018 EP 18155038**

(43) Date of publication of application:
**09.12.2020 Bulletin 2020/50**

(73) Proprietor: **Basell Poliolefine Italia S.r.l.**
**20121 Milano (IT)**

(72) Inventors:
- **FLENNIKEN, Cindy**
**Houston, Texas 77010 (US)**
- **LEE, Chun D.**
**Houston, Texas 77010 (US)**
- **CAVALIERI, Claudio**
**44122 Ferrara (IT)**
- **GALVAN, Monica**
**44122 Ferrara (IT)**
- **BAUDIER, Vincent**
**1040 Brussels (BE)**
- **BIONDINI, Gisella**
**44122 Ferrara (IT)**

(74) Representative: **LyondellBasell**
**c/o Basell Poliolefine Italia**
**Intellectual Property**
**P.le Donegani 12**
**44122 Ferrara (IT)**

(56) References cited:
**EP-A1- 2 072 576**
**WO-A1-2010/015876**
**WO-A1-2012/000885**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

FIELD OF THE INVENTION

The present disclosure relates to a crosslinked polyolefin composition comprising a polyolefin blend containing propylene based polymers and LLDPE to be used for cable insulation

BACKGROUND OF THE INVENTION

Crosslinked low-, medium,- and extra-high voltage power cables are predominantly made from low density polyethylene (LDPE), however in order to improve the properties of the cable other polymers can be added.
WO 2016/200600 relates to a composition for cable insulation comprising:

(A) 85 to 99% low density polyethylene (LDPE) having a crystallinity of greater than 40%;
(B) 1 to less than 14% propylene polymer having an upper melting point of greater than or equal to 130°C; and
(C) $\geq$ 0.5% peroxide.

However, the propylene polymer is propylene homopolymer or propylene heterophasic copolymer.

SUMMARY OF THE INVENTION

The applicant found that cable insulation or jacketing with good mechanical properties can be obtained by using a polyolefin composition comprising:

from 20.0 wt% to 80.0 wt% of component T1) being an interpolymer of ethylene and less than 7 wt%, of one or more polymerizable comonomers including (but not limited to) unsaturated esters and hydrolyzable silane monomers;
from 0.5 wt% to 5.0 wt% of a peroxide;
from 20.0 wt% to 80.0 wt% of component T2) comprising:

A) 5-35% by weight of a propylene homopolymer or a propylene ethylene copolymer containing 90% by weight or more of propylene units; component A) containing 10% by weight or less of a fraction soluble in xylene at 25°C ($XS_A$), both the amount of propylene units and of the fraction $XS_A$ being referred to the weight of A);
B) 20-50% by weight; of a copolymer of ethylene and a $C_3$-$C_8$ alpha-olefin containing from 0.1% to 20% by weight of alpha-olefin units and containing 25% by weight or less; of a fraction soluble in xylene at 25°C ($XS_B$), both the amount of alpha-olefin units and of the fraction $XS_B$ being referred to the weight of (B); and
C) 30-60% by weight of a copolymer of ethylene and propylene containing from 25% to 75% by weight of ethylene units and containing from 40% to 95% by weight of a fraction soluble in xylene at 25°C (XSc), both the amount of ethylene units and of the fraction XSc being referred to the weight of (C);

the amounts of (A), (B) and (C) being referred to the total weight of (A) + (B) + (C), the sum of the amount of (A) + (B) + (C) being 100;
from 20.0 wt% to 80.0 wt% of component T1) being a low density polyethylene (LDPE)
from 0.5 wt% to 5.0 wt% of a peroxide.

DETAILED DESCRIPTION OF THE INVENTION

Thus the present disclosure is directed to a cable insulation or jacketing with good mechanical properties obtained by using a polyolefin composition:

from 20.0 wt% to 80.0 wt% of component T1) being a an interpolymer of ethylene and less than 7 wt%, preferably less than 3 wt%, of one or more polymerizable comonomers including (but not limited to) unsaturated esters and hydrolyzable silane monomers.
from 0.5 wt% to 5.0 wt% of a peroxide.
from 20.0 wt% to 80.0 wt% of component T2) comprising:

A) 5-35% by weight; preferably 10-30 % by weight; more preferably 15-23%by weight of a propylene homopolymer containing or a propylene ethylene copolymer containing 90% by weight or more preferably 95 % by weight or more; preferably 97 % by weight or more of propylene units; component A) containing 10% by weight or less

preferably 8 wt% or less more preferably 6 wt% or less of a fraction soluble in xylene at 25°C ($XS_A$), both the amount of propylene units and of the fraction $XS_A$ being referred to the weight of A);

B) 20-50% by weight; preferably 25-45% by weight; more preferably 30-40 % by weight of a copolymer of ethylene and a $C_3$-$C_8$ alpha-olefin containing from 0.1% to 20% by weight; preferably from 5% to 15 % by weight; more preferably from 7 % to 12 % by weight of alpha-olefin units and containing 25% by weight or less; preferably from 20% by weight or less; preferably 17% by weight or less of a fraction soluble in xylene at 25°C ($XS_B$), both the amount of alpha-olefin units and of the fraction $XS_B$ being referred to the weight of (B); and

C) 30-60% by weight; preferably 35-55% by weight; more preferably 40-50 % by weight of a copolymer of ethylene and propylene containing from 25% to 75% by weight; preferably from 37% to 65% by weight; more preferably from 45% to 58% by weight of ethylene units and containing from 40% to 95% by weight of a fraction soluble in xylene at 25°C (XSc), both the amount of ethylene units and of the fraction XSc being referred to the weight of (C);

the amounts of (A), (B) and (C) being referred to the total weight of (A) + (B) + (C), the sum of the amount of (A) + (B) + (C) being 100.

Component (A) preferably has the melt flow rate (230°C/2.16 kg) ranging between 50 and 200 g/10 min; more preferably between 80 and 170 g/10 min.

Components (A)+ (B) blended together have the melt flow rate (230°C/2.16 kg) comprised between 0.1 and 70 g/10 min. preferably between 1 and 50 g/10 min; more preferably between 8 and 40 g/10 min.

Preferably component B) has a density (determined according to ISO 1183 at 23°C) of from 0.940 to 0.965 $g/cm^3$. Component B) is an ethylene copolymer containing $C_3$-$C_8$ alpha-olefin derived units. Specific examples of such alpha-olefin comonomers are propylene, 1-butene, 1-pentene, 4-methyl-1-pentene, 1-hexene and 1-octene; 1-butene 1-hexene and 1-octene being preferred; 1-butene being the most preferred.

Preferably the component T2) has a melt flow rate (230°C/2.16 kg) comprised between 0.5 to 25 g/10min preferably from 0.8 to 20.0g/10min; even more preferably from 1.0 to 18.0g/10min..

Preferably, the component T2) has an intrinsic viscosity [$\eta$] (measured in tetrahydronaphthalene at 135 °C) of the xylene soluble fraction at 25°C comprised between 1.5 to 4.0 dl/g preferably the intrinsic viscosity is comprised between 2.0 and 3.5 dl/g; more preferably the intrinsic viscosity is comprised between 2.1 and 2.8 dl/g.

For the present disclosure the term "copolymer" comprises only polymers containing two kinds of comonomers such as propylene and ethylene or ethylene and 1-butene.

It has been found that the component T2) can be prepared by a sequential polymerization, comprising at least three sequential steps, wherein components (A), (B) and (C) are prepared in separate subsequent steps, operating in each step, except the first step, in the presence of the polymer formed and the catalyst used in the preceding step. The catalyst is added only in the first step, however its activity is such that it is still active for all the subsequent steps.

The polymerization, which can be continuous or batch, is carried out following known techniques and operating in liquid phase, in the presence or not of inert diluent, or in gas phase, or by mixed liquid-gas techniques. It is preferable to carry out the polymerization in gas phase.

Reaction time, pressure and temperature relative to the polymerization steps are not critical, however it is best if the temperature is from 50 to 100 °C. The pressure can be atmospheric or higher.

The regulation of the molecular weight is carried out by using known regulators, hydrogen in particular.

The said polymerizations are preferably carried out in the presence of a Ziegler-Natta catalyst. Typically, a Ziegler-Natta catalyst comprises the product of the reaction of an organometallic compound of group 1, 2 or 13 of the Periodic Table of elements with a transition metal compound of groups 4 to 10 of the Periodic Table of Elements (new notation). In particular, the transition metal compound can be selected among compounds of Ti, V, Zr, Cr and Hf and is preferably supported on $MgCl_2$.

Particularly preferred catalysts comprise the product of the reaction of said organometallic compound of group 1, 2 or 13 of the Periodic Table of elements, with a solid catalyst component comprising a Ti compound and an electron donor compound supported on $MgCl_2$.

Preferred organometallic compounds are the aluminum alkyl compounds.

Thus, in a preferred embodiment, the polymer composition B) of the present invention is obtainable by using a Ziegler-Natta polymerization catalyst, more preferably a Ziegler-Natta catalyst supported on MgCl2, even more preferably a Ziegler-Natta catalyst comprising the product of reaction of:

1) a solid catalyst component comprising a Ti compound and an electron donor (internal electron-donor) supported on $MgCl_2$;
2) an aluminum alkyl compound (cocatalyst); and, optionally,
3) an electron-donor compound (external electron-donor).

The solid catalyst component (1) contains as electron-donor a compound generally selected among the ethers, ketones, lactones, compounds containing N, P and/or S atoms, and mono- and dicarboxylic acid esters.

Catalysts having the above-mentioned characteristics are well known in the patent literature; particularly advantageous are the catalysts described in US patent 4,399,054 and European patent 45977.

Particularly suited among the said electron-donor compounds are phthalic acid esters, preferably diisobutyl phthalate, and succinic acid esters.

Suitable succinic acid esters are represented by the formula (I):

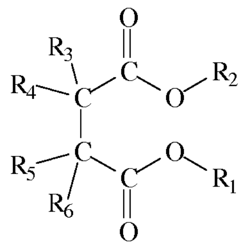

(I)

wherein the radicals $R_1$ and $R_2$, equal to or different from each other, are a $C_1$-$C_{20}$ linear or branched alkyl, alkenyl, cycloalkyl, aryl, arylalkyl or alkylaryl group, optionally containing heteroatoms; the radicals $R_3$ to $R_6$ equal to or different from each other, are hydrogen or a $C_1$-$C_{20}$ linear or branched alkyl, alkenyl, cycloalkyl, aryl, arylalkyl or alkylaryl group, optionally containing heteroatoms, and the radicals $R_3$ to $R_6$ which are joined to the same carbon atom can be linked together to form a cycle.

$R_1$ and $R_2$ are preferably $C_1$-$C_8$ alkyl, cycloalkyl, aryl, arylalkyl and alkylaryl groups. Particularly preferred are the compounds in which $R_1$ and $R_2$ are selected from primary alkyls and in particular branched primary alkyls. Examples of suitable $R_1$ and $R_2$ groups are methyl, ethyl, n-propyl, n-butyl, isobutyl, neopentyl, 2-ethylhexyl. Particularly preferred are ethyl, isobutyl, and neopentyl.

One of the preferred groups of compounds described by the formula (I) is that in which $R_3$ to $R_5$ are hydrogen and $R_6$ is a branched alkyl, cycloalkyl, aryl, arylalkyl and alkylaryl radical having from 3 to 10 carbon atoms. Another preferred group of compounds within those of formula (I) is that in which at least two radicals from $R_3$ to $R_6$ are different from hydrogen and are selected from $C_1$-$C_{20}$ linear or branched alkyl, alkenyl, cycloalkyl, aryl, arylalkyl or alkylaryl group, optionally containing heteroatoms. Particularly preferred are the compounds in which the two radicals different from hydrogen are linked to the same carbon atom. Furthermore, also the compounds in which at least two radicals different from hydrogen are linked to different carbon atoms, that is $R_3$ and $R_5$ or $R_4$ and $R_6$ are particularly preferred.

Other electron-donors particularly suited are the 1,3-diethers, as illustrated in published European patent applications EP-A-361 493 and 728769.

As cocatalysts (2), one preferably uses the trialkyl aluminum compounds, such as Al-triethyl, Al-triisobutyl and Al-tri-n-butyl.

The electron-donor compounds (3) that can be used as external electron-donors (added to the Al-alkyl compound) comprise the aromatic acid esters (such as alkylic benzoates), heterocyclic compounds (such as the 2,2,6,6-tetramethylpiperidine and the 2,6-diisopropylpiperidine), and in particular silicon compounds containing at least one Si-OR bond (where R is a hydrocarbon radical).

Examples of the said silicon compounds are those of formula $R^1{}_aR^2{}_bSi(OR^3)_c$, where a and b are integer numbers from 0 to 2, c is an integer from 1 to 3 and the sum (a+b+c) is 4; $R^1$, $R^2$ and $R^3$ are alkyl, cycloalkyl or aryl radicals with 1-18 carbon atoms optionally containing heteroatoms.

Useful examples of silicon compounds are (tert-butyl)$_2$Si(OCH$_3$)$_2$, (cyclohexyl)(methyl)Si (OCH$_3$)$_2$, (phenyl)$_2$Si(OCH$_3$)$_2$ and (cyclopentyl)$_2$Si(OCH$_3$)$_2$.

The previously said 1,3- diethers are also suitable to be used as external donors. In the case that the internal donor is one of the said 1,3-diethers, the external donor can be omitted.

The catalysts may be precontacted with small quantities of olefin (prepolymerization), maintaining the catalyst in supension in a hydrocarbon solvent, and polymerizing at temperatures from room to 60 °C, thus producing a quantity of polymer from 0.5 to 3 times the weight of the catalyst.

The operation can also take place in liquid monomer, producing, in this case, a quantity of polymer up to 1000 times the weight of the catalyst.

Component T1) is low density polyethylene (LDPE) and is an interpolymer of ethylene and less than 7 wt%, preferably less than 3 wt%, of one or more polymerizable comonomers including (but not limited to) unsaturated esters and hydrolyzable silane monomers.

LDPE used in the practice of this invention can be prepared by any known process known in the art such as high-pressure processes.

Preferably the LDPE is a copolymer of ethylene and unsaturated esters and/or hydrolysable silane monomers. These copolymers are well known and can be prepared by conventional high-pressure processes or post-reactor modification.

In various embodiments, the unsaturated esters can be alkyl acrylates, alkyl methacrylates, or vinyl carboxylates. The alkyl groups can have from 1 to 8 carbon atoms, preferably from 1 to 4 carbon atoms. The carboxylate groups can have from 2 to 8 carbon atoms, preferably from 2 to 5 carbon atoms.

Examples of acrylates and methacrylates include, but are not limited to, ethyl acrylate, methyl acrylate, methyl methacrylate, t-butyl acrylate, n-butyl acrylate, n-butyl methacrylate, and 2-ethylhexyl acrylate.

Examples of vinyl carboxylates include, but are not limited to, vinyl acetate, vinyl propionate, and vinyl butanoate.

Hydrolyzable silane monomers can be any hydrolyzable silane monomer that will effectively copolymerize with an olefin (e.g., ethylene), or graft to and crosslink an olefin (e.g., ethylene) polymer. Preferably Hydrolyzable silane monomers are those described by the following formula (I):

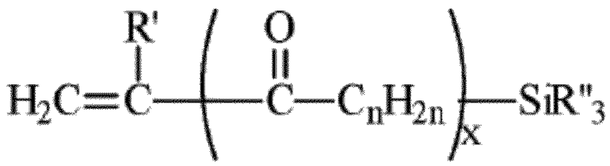

(I)

in which R' is a hydrogen atom or methyl group; x is 0 or 1; n is an integer from 1 to 12, preferably from 1 to 4, and each R" independently is a hydrolyzable organic group such as an alkoxy group having from 1 to 12 carbon atoms (e.g. methoxy, ethoxy, butoxy), an aryloxy group (e.g. phenoxy), an araloxy group (e.g. benzyloxy), an aliphatic acyloxy group having from 1 to 12 carbon atoms (e.g. formyloxy, acetyloxy, propanoyloxy), an amino or substituted amino group (alkylamino, arylamino), or a lower-alkyl group having 1 to 6 carbon atoms, with the proviso that not more than one of the three R" groups is an alkyl. Such silanes may be copolymerized with ethylene in a a high-pressure process. Such silanes may also be grafted to a suitable ethylene polymer by the use of a suitable quantity of organic peroxide. Suitable silanes include unsaturated silanes that comprise an ethylenically unsaturated hydrocarbyl group, such as a vinyl, allyl, isopropenyl, butenyl, cyclohexenyl or gamma (meth)acryloxy allyl group, and a hydrolyzable group, such as, for example, a hydrocarbyloxy, hydrocarbonyloxy, or hydrocarbylamino group. Examples of hydrolyzable groups include methoxy, ethoxy, formyloxy, acetoxy, proprionyloxy, and alkyl or arylamino groups. Preferred silanes are the unsaturated alkoxy silanes which can be grafted onto the polymer or copolymerized in-reactor with other monomers (such as ethylene and acrylates). Suitable hydrolyzable silane monomers include, but are not limited to, vinyltrimethoxysilane (VTMS), vinyltriethoxysilane (VTES), vinyltriacetoxysilane, and gamma-(meth)acryloxy propyl trimethoxy silane.

The LDPE has preferably a melt index (h) from 0.1 to 100 grams per 10 minutes (g/10 min), measured at 190°C/2.16 kg preferably from 0.3 to 100 g/10 min, more preferably from 0.5 to 30 g/10 min, even more preferably 1.0 to 10 g/10 min.

In one embodiment the LDPE has a density greater than or equal to 0.910, or greater than or equal to 0.914, or greater than or equal to 0.916 grams per cubic centimeter (glee or g/cm3). Preferably the LDPE has a density from 0.910 to 0.940, or from 0.915 to 0.935, or from 0.916 to 0.932 g/cc.

Regarding the peroxide, any peroxide that will promote the crosslinking of the composition of this invention can be used in the practice of this invention. Exemplary peroxides include dicumyl peroxide; bis(alpha-t-butyl peroxyisopropyl)benzene; isopropylcumyl t-butyl peroxide; t-buty lcumy 1 peroxide; di-t-buty 1 peroxide; 2,5-bis(t-buty1peroxy) 2,5-dimethy lhexane; 2,5-bis(t-butylperoxy) 2,5-dimethylhexane-3; 1,I-bis(t-butylperoxy)3,3,5-trimethylcyclo-hexane; isopropylcumyl cumylperoxide; di(isopropylcumyl) peroxide; or mixtures thereof. Peroxide curing agents are used in amounts of at least 0.5 wt% based on the weight of the composition. In various embodiments the peroxide curing agent is used in an amount of 0.5-10, or 0.7-5 or 1-3 wt% based on the weight of the composition. The peroxides can be used alone or in combination with various other known curing co-agents, boosters, and retarders, such as triallyl isocyanurate; ethoxylated bisphenol A dimethacrylate; a-methyl styrene dimer (AMSD); and other co-agents described in USP 5,346,961 and 4,018,852.

The following examples are given in order to illustrate the present disclosure.

## EXAMPLES

## CHARACTERIZATIONS

### Xylene-soluble faction at 25°C (XS or Xs)

The Xylene Soluble fraction was measured according to ISO 16152, 2005, but with the following deviations (between brackets what prescribed by the ISO 16152)

The solution volume is 250 ml (200 ml);

During the precipitation stage at 25°C for 30 min, the solution, for the final 10 minutes, is kept under agitation by a magnetic stirrer (30 min, without any stirring at all);

The final drying step is done under vacuum at 70°C (100 °C);

The content of said xylene-soluble fraction is expressed as a percentage of the original 2.5 grams and then, by difference (complementary to 100), the xylene unsoluble %;

XS of components B) and C) have been calculated by using the formula;

$$XS_{tot}=WaXS_A+WbXS_B+WcXS_C$$

wherein Wa, Wb and Wc are the relative amount of components A, B and C (A+B+C=1).

### Melt Flow Rate (MFR)

Measured according to ISO 1133 at 230°C with a load of 2.16 kg, unless otherwise specified.

### Intrinsic viscosity IV

The sample is dissolved in tetrahydronaphthalene at 135 °C and then is poured into the capillary viscometer. The viscometer tube (Ubbelohde type) is surrounded by a cylindrical glass jacket; this setup allows temperature control with a circulating thermostated liquid. The downward passage of the meniscus is timed by a photoelectric device.

The passage of the meniscus in front of the upper lamp starts the counter which has a quartz crystal oscillator. The meniscus stops the counter as it passes the lower lamp and the efflux time is registered: this is converted into a value of intrinsic viscosity through Huggins' equation (Huggins, M.L., J. Am. Chem. Soc., 1942, 64, 2716) provided that the flow time of the pure solvent is known at the same experimental conditions (same viscometer and same temperature). One single polymer solution is used to determine [$\eta$].

### Comonomer (ethylene (C2) and 1-butene (C4)) content

Comonomer ($C_2$ and $C_4$) content

The content of comonomers was determined by infrared spectroscopy by collecting the IR spectrum of the sample vs. an air background with a Fourier Transform Infrared spectrometer (FTIR). The instrument data acquisition parameters were:

- purge time: 30 seconds minimum
- collect time: 3 minutes minimum
- apodization: Happ-Genzel
- resolution: 2 $cm^{-1}$.

*Sample Preparation* - Using a hydraulic press, a thick sheet was obtained by compression molding about g 1 of sample between two aluminum foils. A small portion was cut from this sheet to mold a film. The film thickness was set in order to have a maximum absorbance of the $CH_2$ absorption band recorded at ~720 $cm^{-1}$ of 1.3 a.u. (% Transmittance > 5%). Molding conditions were 180±10°C (356°F) and pressure was around 10 kg/$cm^2$ (142.2 PSI) for about one minute. The pressure was then released, the sample removed from the press and cooled to room temperature. The spectrum of pressed film sample was recorded in absorbance vs. wavenumbers ($cm^{-1}$). The following measurements were used to calculate ethylene ($C_2$) and 1-butene ($C_4$) contents:

a) Area (At) of the combination absorption bands between 4482 and 3950 $cm^{-1}$ which is used for spectrometric

normalization of film thickness.

b) Area ($A_{C2}$) of the absorption band due to methylenic sequences (CH2 rocking vibration) in the range of 660 to 790 $cm^{-1}$ after a proper digital subtraction of an isotactic polypropylene (IPP) and a $C_2C_4$ references spectrum.

c) The factor of subtraction ($FCR_{C4}$) between the spectrum of the polymer sample and the $C_2C_4$ reference spectrum. The reference spectrum is obtained by digital subtraction of a linear polyethylene from a $C_2C_4$ copolymer, in order to extract the $C_4$ band (ethyl group at ~771 cm-1).

The ratio $A_{C2}$ / At is calibrated by analyzing ethylene-propylene standard copolymers of known compositions, determined by NMR spectroscopy.

The assignments of the spectra, the evaluation of triad distribution and the composition were made according to Kakugo ("Carbon-13 NMR determination of monomer sequence distribution in ethylene-propylene copolymers prepared with δ-titanium trichloride-diethylaluminum chloride" M. Kakugo, Y. Naito, K. Mizunuma and T. Miyatake, Macromolecules, 1982, 15, 1150).

In order to calculate the ethylene ($C_2$) and 1-butene ($C_4$) content, calibration curves were obtained by using samples of known amount of ethylene and 1-butene detected by $^{13}$C-NMR.

Calibration for ethylene - A calibration curve was obtained by plotting $A_{C2}/A_t$ versus ethylene molar percent (%C2m), and the coefficient $a_{C2}$, $b_{C2}$ and $c_{C2}$ then calculated from a "linear regression".

Calibration for 1-butene - A calibration curve was obtained by plotting $FCR_{C4}/A_t$ versus butane molar percent (%$C_4$m) and the coefficients $a_{C4}$, $b_{C4}$ and $C_{C4}$ then calculated from a "linear regression".

The spectra of the unknown samples are recorded and then ($A_t$), ($A_{C2}$) and ($FCR_{C4}$) of the unknown sample are calculated.

The ethylene content (% molar fraction C2m) of the sample was calculated as follows:

$$\%C2m = -b_{C2} + \frac{\sqrt{b_{C2}^2 - 4 \cdot a_{C2} \cdot (c_{C2} - \frac{A_{C2}}{A_t})}}{2 \cdot a_{C2}}$$

The 1-butene content (% molar fraction C4m) of the sample was calculated as follows:

$$\%C4m = -b_{C4} + \frac{\sqrt{b_{C4}^2 - 4 \cdot a_{C4} \cdot (c_{C4} - \frac{FCR_{C4}}{A_t})}}{2 \cdot a_{C4}}$$

$a_{C4}$, $b_{C4}$, $c_{C4}$ $a_{C2}$, $b_{C2}$, $c_{C2}$ are the coefficients of the two calibrations.

Changes from mol% to wt% are calculated by using molecular weigths.

Amount (wt%) of comonomer of components A-C are calculated by using the relation;

$$Com_{tot}=WaCom_A+WbCom_B+WcCom_C$$

wherein Wa, Wb and Wc are the relative amount of components A, B and C (A+B+C=1)

Comtot, ComA, ComB, ComC are the amounts of comonomer in the composition (tot) and in components A-C

## Determination of the Haze

Some films with a thickness of 50 μm are prepared by extruding each test composition in a single screw Collin extruder (length/diameter ratio of screw 1:25) at a film drawing speed of 7 m/min and a melt temperature do 210-250 °C.

50 μm film specimens have been used. The haze value is measured using a Gardner photometric unit connected to a Hazemeter type UX-10 or an equivalent instrument having G.E. 1209 light source with filter "C". Reference samples of known haze are used for calibrating the instrument.

Examples 1 - Preparation of component T2)

Catalyst precursor

The solid catalyst component used in polymerization is a Ziegler-Natta catalyst component supported on magnesium chloride, containing titanium and diisobutylphthalate as internal donor, prepared as follows. An initial amount of microspheroidal MgCl2·2.8C2H5OH was prepared according to the method described in Example 2 of USP 4,399,054 but operating at 3,000 rpm instead of 10,000. The so obtained adduct was then subject to thermal dealcoholation at increasing temperatures from 30 to 130°C operating in nitrogen current until the molar alcohol content per mol of Mg is 1.16. Into a 1000 mL four-necked round flask, purged with nitrogen, 500 mL of TiCl4 were introduced at 0°C. While stirring, 30 grams of the microspheroidal MgCl2·1.16C2H5OH adduct (prepared as described above) were added. The temperature was raised to 120°C and kept at this value for 60 minutes. During the temperature increase, an amount of diisobutylphthalate was added such as to have a Mg/ diisobutylphthalate molar ratio of 18. After the mentioned 60 minutes, the stirring was stopped, the liquid siphoned off and the treatment with TiCl4 was repeated at 100°C for 1 hour in the presence of an amount of diisobutylphthalate such as to have a Mg/ diisobutylphthalate molar ratio of 27. After that time the stirring was stopped, the liquid siphoned off and the treatment with TiCl4 was repeated at 100°C for 30 min. After sedimentation and siphoning at 85°C the solid was washed six times with anhydrous hexane (6 x 100 ml) at 60 °C.

Catalyst system and prepolymerization

Before introducing it into the polymerization reactors, the solid catalyst component described above is contacted at 30 °C for 9 minutes with aluminum triethyl (TEAL) and dicyclopentyldimethoxysilane (DCPMS), in a TEAL/DCPMS weight ratio equal to about 15 and in such quantity that the TEAL/solid catalyst component weight ratio be equal to 4.

The catalyst system is then subjected to prepolymerization by maintaining it in suspension in liquid propylene at 50 °C for about 75 minutes before introducing it into the first polymerization reactor.

Polymerization

The polymerization is carried out in continuous in a series of three gas-phase reactors equipped with devices to transfer the product from the first reactor to the second one. Into the first gas phase polymerization reactor a propylene-based polymer (A) is produced by feeding in a continuous and constant flow the prepolymerized catalyst system, hydrogen (used as molecular weight regulator) and propylene all in the gas state. The propylene-based polymer (A) coming from the first reactor is discharged in a continuous flow and, after having been purged of unreacted monomers, is introduced, in a continuous flow, into the second gas phase reactor, together with quantitatively constant flows of hydrogen and ethylene, all in the gas state. In the second reactor a copolymer of ethylene (B) is produced. The product coming from the second reactor is discharged in a continuous flow and, after having been purged of unreacted monomers, is introduced, in a continuous flow, into the third gas phase reactor, together with quantitatively constant flows of hydrogen, ethylene and propylene all in the gas state. In the third reactor an ethylene-propylene polymer (C) is produced. Polymerization conditions, molar ratio of the reactants and composition of the copolymers obtained are shown in Table 1. The polymer particles exiting the third reactor are subjected to a steam treatment to remove the reactive monomers and volatile substances, and then dried. Thereafter the polymer particles are mixed with a usual stabilizing additive composition in a twin screw extruder Berstorff ZE 25 (length/diameter ratio of screws: 34) and extruded under nitrogen atmosphere in the following conditions:

| | |
|---|---|
| Rotation speed: | 250 rpm; |
| Extruder output: | 15 kg/hour; |
| Melt temperature: | 245 °C. |

The stabilizing additive composition is made of the following components:

- 0.1% by weight of Irganox® 1010;
- 0.1% by weight of Irgafos® 168;
- 0.04% by weight of DHT-4A (hydrotalcite);

all percent amounts being referred to the total weight of the polymer and stabilizing additive composition.

The said Irganox® 1010 is 2,2-bis[3-[,5-bis(1,1-dimethylethyl)-4-hydroxyphenyl)-1-oxopropoxy]methyl]-1,3-propanediyl-3,5-bis(1,1-dimethylethyl)-4-hydroxybenzene-propanoate, while Irgafos® 168 is tris(2,4-di-tert.-butylphenyl)phosphite. The characteristics relating to the polymer composition, reported in Table 2, are obtained from measurements carried out on the so extruded polymer, which constitutes the stabilized ethylene polymer composition according to the exemplary embodiments disclosed herein.

Table 1 - Polymerization conditions

| Example | | 1 |
|---|---|---|
| 1st Reactor - component (A) | | |
| Temperature | °C | 60 |
| Pressure | barg | 16 |
| $H_2/C_3$- | mol. | 0.24 |
| Split | wt% | 22 |
| Xylene soluble of (A) ($XS_A$) | wt% | 4.2 |
| MFR of (A) | g/10 min. | 110 |
| 2nd Reactor - component (B) | | |
| Temperature | °C | 80 |
| Pressure | barg | 18 |
| $H_2/C_2$- | mol. | 0.81 |
| $C_4$-/($C_2$- + $C_4$-) | mol. | 0.25 |
| $C_2$-/($C_2$- + $C_3$-) | mol. | 0.98 |
| Split | wt% | 32 |
| $C_2$- content of B* | wt% | 90 |
| $C_4$- content of B* | wt% | 10 |
| Xylene soluble of B ($XS_B$)* | wt% | 16.0 |
| Xylene soluble of (A + B) | wt% | 12.0 |
| MFR of (A + B) | g/10 min. | 35.9 |
| 3rd Reactor - component (C) | | |
| Temperature | °C | 65 |
| Pressure | barg | 18 |
| $H_2/C_2$- | mol. | 0.17 |
| $C_2$-/($C_2$- + $C_3$-) | mol. | 0.42 |
| Split | wt% | 46 |
| $C_2$- content of C* | wt% | 52 |
| Xylene soluble of (C) ($XS_C$)* | wt% | 83 |
| Notes: C2- = ethylene (IR); C3- = propylene (IR); C4- = 1-butene (IR); split = amount of polymer produced in the concerned reactor. * Calculated values. | | |

Cable preparation

14 AWG solid Cu wire having 30 and 60 mil thick insulation was produced with the following composition. Wires were water bath cured (silane crosslinked) at 90°C overnight.

Table 2

| | comp ex 1 | ex 2 | comp ex 3 | ex 4 |
|---|---|---|---|---|
| Material | 30 mil | 30 mil | 60 mil | 60 mil |
| AQ120000 | 48 | 48 | 48 | 48 |
| CM95583 | 7 | 7 | 7 | 7 |
| KM05583 | 5 | 5 | 5 | 5 |
| composition T1) | 0 | 40 | 0 | 40 |
| GA808091 | 40 | 0 | 40 | 0 |
| AQ120000 is AQUATHENE AQ120000, an ethylene vinylsilane copolymer designed for use in low voltage, power cable applications.<br>GA808091 is PETROTHENE GA 808-091, a broad molecular weight, linear low density polyethylene resin designed for use as a base resin in wire and cable jacketing and insulations (both thermoplastic and crosslinked).<br>KM05583 Ambient Cure Catalyst masterbatch (MB) | | | | |

The crush resistance of the wire obtained in Examples 1-4 has been measured according to Reference Standard for Electrical Wires, Cables, and Flexible Cords:UL 1581 (2001) 620.

The crush resistance of the wires of examples 1-4 is reported in table 3

Table 3

| | comp ex 1 | ex 2 | comp ex 3 | ex 4 |
|---|---|---|---|---|
| Crush lbs load @yield | 2600 | 3200 | 4550 | 4850 |
| Crush lbs load @max | 2750 | 3200 | 4600 | 5000 |

The crush resistance of the wire according to the invention result to be higher than the wire of the comparative examples.

## Claims

**1.** Cable insulation or jacketing comprising:

from 20.0 wt% to 80.0 wt% of component T1) being an interpolymer of ethylene and less than 7 wt%, of one or more polymerizable comonomers including (but not limited to) unsaturated esters and hydrolyzable silane monomers;
from 0.5 wt% to 5.0 wt% of a peroxide;
from 20.0 wt% to 80.0 wt% of component T2) comprising

A) 5-35% by weight of a propylene homopolymer containing 5% by weight or less of a fraction soluble in xylene at 25°C ($XS_A$), or a propylene ethylene copolymer containing 90% by weight or more of propylene units; containing 10% by weight or less of a fraction soluble in xylene at 25°C ($XS_A$), both the amount of propylene units and of the fraction $XS_A$ being referred to the weight of A);
B) 20-50% by weight; of a copolymer of ethylene and a $C_3$-$C_8$ alpha-olefin containing from 0.1% to 20% by weight of alpha-olefin units and containing 25% by weight or less; of a fraction soluble in xylene at 25°C ($XS_B$), both the amount of alpha-olefin units and of the fraction $XS_B$ being referred to the weight of (B); and
C) 30-60% by weight of a copolymer of ethylene and propylene containing from 25% to 75% by weight of ethylene units and containing from 40% to 95% by weight of a fraction soluble in xylene at 25°C (XSc), both the amount of ethylene units and of the fraction XSc being referred to the weight of (C);

the amounts of (A), (B) and (C) being referred to the total weight of (A) + (B) + (C), the sum of the amount of (A) + (B) + (C) being 100.

**2.** Cable insulation or jacketing according to claim 1 wherein in component T2:

Component A ranges from 10 % by weight to 30 % by weight;
Component B ranges from 25 % by weight to 45 % by weight; and
Component C ranges from 35 % by weight to 55 % by weight;

**3.** Cable insulation or jacketing according to claims 1 or 2 wherein in component T2)
Component A ranges from 15 % by weight to 25 % by weight;
Component B ranges from 30 % by weight to 40 % by weight; and
Component C ranges from 40 % by weight to 50 % by weight; and

**4.** Cable insulation or jacketing according to anyone of claims 1-3 wherein in component T2) component A) is a propylene homopolymer

**5.** Cable insulation or jacketing according to anyone of claims 1-4 wherein in component T2)
component B) is a copolymer of ethylene and a $C_3$-$C_8$ alpha-olefin containing from 5% to 15 % by weight of alpha-olefin units.

**6.** Cable insulation or jacketing according to anyone of claims 1-5 wherein in component T2) component C) is a copolymer of ethylene and propylene containing from 37% to 65% by weight of ethylene units.

**7.** Cable insulation or jacketing according to anyone of claims 1-6 wherein in component T2) component (A) has the melt flow rate (230°C/2.16 kg) ranging between 50 and 200 g/10 min;

**8.** Cable insulation or jacketing according to anyone of claims 1-7 wherein in component T2) component (B) has the melt flow rate (230°C/2.16 kg) ranging between 0.1 and 70 g/10 min;

**9.** Cable insulation or jacketing according to anyone of claims 1-8 wherein component T1) is an interpolymer of ethylene and less than 3 wt%, of one or more polymerizable comonomers including (but not limited to) unsaturated esters and hydrolyzable silane monomers.

**10.** Cable insulation or jacketing according to anyone of claims 1-9 wherein component T1) is a copolymer of ethylene and unsaturated esters and/or hydrolysable silane monomers.

**Patentansprüche**

**1.** Kabelisolierung oder -ummantelung, umfassend:

20,0 Gew.% bis 80,0 Gew.% Komponente T1), die ein Interpolymer von Ethylen und weniger als 7 Gew.% von einem oder mehreren polymerisierbaren Comonomeren ist, einschließlich ungesättigter Ester und hydrolysierbarer Silanmonomere (jedoch nicht darauf begrenzt);
0,5 Gew.% bis 5,0 Gew.% eines Peroxids;
20,0 Gew.% bis 80,0 Gew.% Komponente T2), die Folgendes umfasst:

A) 5 bis 35 Gew.% eines Propylenhomopolymers, das 5 Gew.% oder weniger von einer in Xylol bei 25 °C ($XS_A$) löslichen Fraktion enthält, oder eines Propylen-EthylenCopolymers, das 90 Gew.% oder mehr Propyleneinheiten enthält; 10 Gew.% oder weniger von einer in Xylol bei 25 °C löslichen Fraktion ($XS_A$) enthält, wobei sich sowohl die Menge der Propyleneinheiten als auch diejenige der Fraktion $XS_A$ auf das Gewicht von A) beziehen;
B) 20 bis 50 Gew.% eines Copolymers von Ethylen und einem $C_3$- bis Cs-alpha-Olefin, das 0,1 Gew.% bis 20 Gew.% alpha-Olefineinheiten enthält und 25 Gew.% oder weniger von einer in Xylol bei 25 °C löslichen Fraktion ($XS_B$) enthält, wobei sich sowohl die Menge der alpha-Olefineinheiten als auch diejenige der Fraktion $XS_B$ auf das Gewicht von (B) beziehen; und
C) 30 bis 60 Gew.% eines Copolymers von Ethylen und Propylen, das 25 Gew.% bis 75 Gew.% Ethyleneinheiten enthält und 40 Gew.% bis 95 Gew.% von einer in Xylol bei 25 °C löslichen Fraktion (XSc) enthält, wobei sich sowohl die Menge der Ethyleneinheiten als auch diejenige der Fraktion XSc auf das Gewicht von (C) beziehen;

die Mengen von (A), (B) und (C) sich auf das Gesamtgewicht von (A) + (B) + (C) beziehen, wobei die Summe der Mengen von (A), (B) und (C) 100 ergibt.

2. Kabelisolierung oder -ummantelung nach Anspruch 1, wobei in Komponente T2:

   Komponente A im Bereich von 10 Gew.% bis 30 Gew.% liegt;
   Komponente B im Bereich von 25 Gew.% bis 45 Gew.% liegt; und
   Komponente C im Bereich von 35 Gew.% bis 55 Gew.% liegt.

3. Kabelisolierung oder -ummantelung nach Anspruch 1 oder 2, wobei in Komponente T2)
   Komponente A im Bereich von 15 Gew.% bis 25 Gew.% liegt;
   Komponente B im Bereich von 30 Gew.% bis 40 Gew.% liegt; und
   Komponente C im Bereich von 40 Gew.% bis 50 Gew.% liegt.

4. Kabelisolierung oder -ummantelung nach einem der Ansprüche 1 bis 3, wobei in der Komponente T2) Komponente A) ein Propylenhomopolymer ist.

5. Kabelisolierung oder -ummantelung nach einem der Ansprüche 1 bis 4, wobei in Komponente T2) Komponente B) ein Copolymer von Ethylen und einem $C_3$-$C_8$-alpha-Olefin ist, das 5 Gew.% bis 15 Gew.% alpha-Olefineinheiten enthält.

6. Kabelisolierung oder -ummantelung nach einem der Ansprüche 1 bis 5, wobei in Komponente T2) Komponente C) ein Copolymer von Ethylen und Propylen ist, das 37 Gew.% bis 65 Gew.% Ethyleneinheiten umfasst.

7. Kabelisolierung oder -ummantelung nach einem der Ansprüche 1 bis 6, wobei in Komponente T2) Komponente (A) eine Schmelzflussrate (230°C/2,16 kg) im Bereich von 50 bis 200 g/10 min aufweist.

8. Kabelisolierung oder -ummantelung nach einem der Ansprüche 1 bis 7, wobei in Komponente T2) Komponente (B) eine Schmelzflussrate (230 °C/2,16 kg) im Bereich von 0,1 bis 70 g/10 min aufweist.

9. Kabelisolierung oder -ummantelung nach einem der Ansprüche 1 bis 8, wobei Komponente T1) ein Interpolymer von Ethylen und weniger als 3 Gew.% von einem oder mehreren polymerisierbaren Comonomeren ist, einschließlich ungesättigter Ester und hydrolysierbarer Silanmonomere (jedoch nicht darauf begrenzt).

10. Kabelisolierung oder -ummantelung nach einem der Ansprüche 1 bis 9, wobei Komponente T1) ein Copolymer von Ethylen und ungesättigten Estern und/oder hydrolysierbaren Silanmonomeren ist.

## Revendications

1. Isolation ou gaine de câble comprenant :

   20,0 % en poids à 80,0 % en poids d'un constituant T1) qui est un interpolymère d'éthylène et de moins de 7 % en poids d'un ou de plusieurs comonomères polymérisables comprenant (mais sans s'y limiter) des esters insaturés et des monomères de silane hydrolysables ;
   0,5 % en poids à 5,0 % en poids d'un peroxyde ;
   20,0 % en poids à 80,0 % en poids d'un constituant T2) comprenant

   A) 5-35 % en poids d'un homopolymère de propylène contenant 5 % en poids ou moins d'une fraction soluble dans le xylène à 25°C ($XS_A$) ou d'un copolymère de propylène-éthylène contenant 90% en poids ou plus de motifs de propylène contenant 10% en poids ou moins d'une fraction soluble dans le xylène à 25°C ($XS_A$), à la fois la quantité de motifs de propylène et de la fraction $XS_A$ étant appelée poids de (A) ;
   B) 20-50 % en poids d'un copolymère d'éthylène et d'une alpha-oléfine en $C_3$-$C_8$ contenant 0,1 % à 20 % en poids de motifs d'alpha-oléfine et contenant 25 % en poids ou moins d'une fraction soluble dans le xylène à 25°C ($XS_B$), à la fois la quantité de motifs alpha-oléfine et de la fraction $XS_B$ étant appelée poids de (B) ; et
   C) 30 à 60 % en poids d'un copolymère d'éthylène et de propylène contenant 25 % à 75 % en poids de motifs d'éthylène et contenant 40 % à 95 % en poids d'une fraction soluble dans le xylène à 25°C (XSc),

à la fois la quantité de motifs d'éthylène et de la fraction XSc étant appelée poids de (C) ;

les quantités de (A), (B) et (C) étant appelées poids total de (A) + (B) + (C), la somme des quantités de (A) + (B) + (C) valant 100.

**2.** Isolation ou gaine de câble selon la revendication 1, où, dans le constituant T2,
le constituant A se situe dans la plage de 10 % en poids à 30 % en poids ;
le constituant B se situe dans la plage de 25 % en poids à 45 % en poids ; et
le constituant C se situe dans la plage de 35 % en poids à 55 % en poids.

**3.** Isolation ou gaine de câble selon les revendications 1 ou 2, où, dans le constituant T2),
le constituant A se situe dans la plage de 15 % en poids à 25 % en poids ;
le constituant B se situe dans la plage de 30 % en poids à 40 % en poids ; et
le constituant C se situe dans la plage de 40 % en poids à 50 % en poids.

**4.** Isolation ou gaine de câble selon l'une quelconque des revendications 1 à 3, où, dans le constituant T2), le constituant A) est un homopolymère de propylène.

**5.** Isolation ou gaine de câble selon l'une quelconque des revendications 1 à 4, où, dans le constituant T2), le constituant B) est un copolymère d'éthylène et d'une alpha-oléfine en $C_3$-$C_8$ contenant 5 % à 15 % en poids de motifs d'alpha-oléfine.

**6.** Isolation ou gaine de câble selon l'une quelconque des revendications 1 à 5, où, dans le constituant T2), le constituant C) est un copolymère d'éthylène et de propylène contenant 37 % à 65 % en poids de motifs d'éthylène.

**7.** Isolation ou gaine de câble selon l'une quelconque des revendications 1 à 6, où, dans le constituant T2), le constituant (A) présente un indice de fluidité à chaud (230°C/2,16 kg) situé entre 50 et 200 g/10 min.

**8.** Isolation ou gaine de câble selon l'une quelconque des revendications 1 à 7, où, dans le constituant T2), le constituant (B) présente un indice de fluidité à chaud (230°C/2,16 kg) situé entre 0,1 et 70 g/10 min.

**9.** Isolation ou gaine de câble selon l'une quelconque des revendications 1 à 8, où le constituant T1) est un interpolymère d'éthylène et de moins de 3 % en poids d'un ou de plusieurs comonomères polymérisables comprenant (mais sans s'y limiter) des esters insaturés et des monomères de silane hydrolysables.

**10.** Isolation ou gaine de câble selon l'une quelconque des revendications 1 à 9, où le constituant T1) est un copolymère d'éthylène et d'esters insaturés et/ou de monomères de silane hydrolysables.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2016200600 A
- US 4399054 A
- EP 45977 A
- EP 361493 A
- EP 728769 A
- US 5346961 A
- US 4018852 A


### Non-patent literature cited in the description


- **HUGGINS, M.L.** *J. Am. Chem. Soc.,* 1942, vol. 64, 2716
- **M. KAKUGO ; Y. NAITO ; K. MIZUNUMA ; T. MIYATAKE.** Carbon-13 NMR determination of monomer sequence distribution in ethylene-propylene copolymers prepared with δ-titanium trichloride-diethylaluminum chloride. *Macromolecules,* 1982, vol. 15, 1150